# EUROPEAN PATENT APPLICATION

(11) **EP 4 614 922 A1**
(43) Date of publication of application: **10.09.2025**
(21) Application number: 23884420.3
(22) Date of filing: 30.08.2023
(51) Int. Cl.: H04L 41/16

(54) **MODEL MANAGEMENT METHOD AND APPARATUS, AND DEVICE**

(30) Priority: 04.11.2022 CN 202211380043
(71) Applicant: Datang Mobile Communications Equipment Co., Ltd., Beijing 100085 (CN)
(72) Inventor: FEI, Yongqiang, Beijing 100085 (CN); WANG, Da, Beijing 100085 (CN); GAO, Qiubin, Beijing 100085 (CN)
(74) Representative: Ipsilon
(86) International application number: PCT/CN2023/115787
(87) International publication number: WO 2024/093483

(57) **Abstract**

Provided in the present disclosure are a model management method and apparatus, and a device, wherein the method is applied to a first device, and the first device is a terminal or a server. The method comprises: sending model-related information to a network device, wherein the model-related information is used for registration or recognition of a first model; and receiving life cycle management control information sent by the network device, wherein the life cycle management control information is used for management of the first model.

## Description

### CROSS-REFERENCES TO RELATED APPLICATIONS

The present application claims priority to Chinese Patent Application No. 202211380043.8 filed on November 04, 2022, entitled "Model Management Method and Apparatus, and Device", which is hereby incorporated by reference in its entirety.

### FIELD

The present application relates to the field of communications, and in particular, to methods and apparatuses for model management and devices.

### BACKGROUND

With the development of artificial intelligence (AI) and machine learning (ML), a solution for improving the performance of communication systems using AI/ML models has been proposed.

The AI/ML model may be a one-sided model, meaning that the model is deployed only on one side, such as a network device side or a first device side, where the first device may be a terminal or a server; the AI/ML model may also be a two-sided model, meaning that the model is deployed on both the network device side and the first device side, requiring collaboration between the network device and the first device to perform correct model inference operations.

The one-sided model deployed on the first device side, or the part of the two-sided model belonging to the first device side, may be trained in a private manner by terminal and chip manufacturers, or third-party service providers, known as a private model of the first device, and is not known to the network device, resulting in network device being unable to manage the lifecycle of the private model of the first device.

### BRIEF SUMMARY

The present application provides methods and apparatuses for model management and devices, managing the lifecycle of a private model of a first device by a network device.

The present application provides a method for model management, performed by a first device, where the first device is a terminal or a server, and the method includes:
transmitting model associated information to a network device, where the model associated information is used to register or identify a first model; and
receiving lifecycle management control information transmitted from the network device, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
performance associated information estimated by the first device;
performance associated information tested by the first device;
performance associated information detected through the network device; or
pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where each bit in the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where each bit in the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
inference indication information of the first model.

In an embodiment, transmitting the model associated information to the network device includes at least one of the following:
transmitting the model associated information to the network device after transmitting first capability reporting information to the network device;
transmitting first capability reporting information and the model associated information to the network device;
transmitting second capability reporting information to the network device, where the second capability reporting information includes the model associated information; or
receiving model registration indication information or model identification indication information transmitted from the network device, and transmitting the model associated information to the network device based on the model registration indication information or the model identification indication information.

In an embodiment, the method further includes:
reporting an inference result of the first model to the network device.

The present application provides a method for model management, performed by a network device, the method including:
receiving model associated information transmitted from a first device, where the model associated information is used to register or identify a first model, and the first device is a terminal or a server; and
transmitting lifecycle management control information to the first device based on the model associated information, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information of tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
the inference indication information of the first model.

In an embodiment, receiving the model associated information transmitted from the first device includes at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, where the second capability reporting information includes the model associated information; or
transmitting model registration indication information or model identification indication information to the first device, and receiving the model associated information transmitted from the first device based on the model registration indication information or the model identification indication information.

In an embodiment, the method further includes:
receiving an inference result of the first model reported from the first device.

The present application provides a first device, including a memory, a transceiver, and a processor, where
the memory is used for storing a computer program; the transceiver is used for transmitting and receiving data under control of the processor; and the processor is used for reading the computer program stored in the memory and performing the following operations:
transmitting model associated information to a network device, where the model associated information is used to register or identify a first model; and
receiving lifecycle management control information transmitted from the network device, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information of tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where each bit in the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where each bit in the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
the inference indication information of the first model.

In an embodiment, transmitting the model associated information to the network device includes at least one of the following:
transmitting the model associated information to the network device after transmitting first capability reporting information to the network device;
transmitting first capability reporting information and the model associated information to the network device;
transmitting second capability reporting information to the network device, where the second capability reporting information includes the model associated information; or
receiving model registration indication information or model identification indication information transmitted from the network device, and transmitting the model associated information to the network device based on the model registration indication information or the model identification indication information.

In an embodiment, the processor is further used for reading the computer program from the memory and performing the following operations:
reporting an inference result of the first model to the network device.

The present application provides a network device, including a memory, a transceiver, and a processor, where
the memory is used for storing a computer program; the transceiver is used for transmitting and receiving data under control of the processor; and the processor is used for reading the computer program stored in the memory and performing the following operations:
receiving model associated information transmitted from a first device, where the model associated information is used to register or identify a first model, and the first device is a terminal or a server; and
transmitting lifecycle management control information to the first device based on the model associated information, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
the inference indication information of the first model.

In an embodiment, receiving the model associated information transmitted from the first device includes at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, where the second capability reporting information includes the model associated information; or
transmitting model registration indication information or model identification indication information to the first device, and receiving the model associated information transmitted from the first device based on the model registration indication information or the model identification indication information.

In an embodiment, the processor is further used for reading the computer program from the memory and performing the following operations:
receiving an inference result of the first model reported from the first device.

The present application provides an apparatus for model management, including:
a first transmitting module, used for transmitting model associated information to a network device, where the model associated information is used to register or identify a first model; and
a first receiving module, used for receiving lifecycle management control information transmitted from the network device, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where each bit in the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where each bit in the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
the inference indication information of the first model.

In an embodiment, the first transmitting module is further used for at least one of the following:
transmitting the model associated information to the network device after transmitting first capability reporting information to the network device;
transmitting first capability reporting information and the model associated information to the network device;
transmitting second capability reporting information to the network device, where the second capability reporting information includes the model associated information; or
receiving model registration indication information or model identification indication information transmitted from the network device, and transmitting the model associated information to the network device based on the model registration indication information or the model identification indication information.

In an embodiment, the first transmitting module is further used for:
reporting an inference result of the first model to the network device.

The present application provides an apparatus for model management, including:
a second receiving module, used for receiving model associated information transmitted from a first device, where the model associated information is used to register or identify a first model, and the first device is a terminal or a server; and
a second transmitting module, used for transmitting lifecycle management control information to the first device based on the model associated information, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
inference indication information of the first model.

In an embodiment, the second receiving module is further used for at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, where the second capability reporting information includes the model associated information; or
transmitting model registration indication information or model identification indication information to the first device, and receiving the model associated information transmitted from the first device based on the model registration indication information or the model identification indication information.

In an embodiment, the second receiving module is further used for:
receiving an inference result of the first model reported from the first device.

The present application provides a computer-readable storage medium storing a computer program, where the computer program is used to cause a computer to perform any of the methods for model management described above.

The present application provides a processor-readable storage medium storing a computer program, where the computer program is used to cause a processor to perform any of the methods for model management described above.

The present application provides a communication device-readable storage medium storing a computer program, where the computer program is used to cause a communication device to perform any of the methods for model management described above.

The present application provides a chip product-readable storage medium storing a computer program, where the computer program is used to cause a chip product to perform any of the methods for model management described above.

The present application provides a computer program product including a computer program, where the computer program, when executed by a processor, is used to perform any of the methods for model management described above.

In the methods and apparatuses for model management and devices provided by the embodiments of the present application, the first device is a terminal or a server. The first device transmits the model associated information to the network device, and the model associated information is used to register or identify the first model; after receiving the model associated information, the network device transmits the lifecycle management control information to the first device based on the model associated information, where the first device may manage the first model based on the lifecycle management control information. By reporting the model associated information to the network device, the first device enables the network device to perform reasonable lifecycle management on the first model of the first device after obtaining model associated information, which also promotes the collaboration between the first device and the network device on the first model and improves system performance.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a schematic diagram of an application scenario according to an embodiment of the present application;
FIG. 2 is a schematic flowchart of a method for model management according to an embodiment of the present application;
FIG. 3 is a schematic structural diagram of a first device according to an embodiment of the present application;
FIG. 4 is a schematic structural diagram of a network device according to an embodiment of the present application;
FIG. 5 is a first schematic structural diagram of an apparatus for model management according to an embodiment of the present application; and
FIG. 6 is a second schematic structural diagram of an apparatus for model management according to an embodiment of the present application.

### DETAILED DESCRIPTION

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

With the development of artificial intelligence (AI) and machine learning (ML), a solution for improving the performance of communication systems using AI/ML models has been proposed. An AI or an ML model may include a one-sided model or a two-sided model. The one-sided model is a model deployed only on one side, such as a model deployed only on the network device side, or a model deployed only on the terminal side, or a model deployed only on the server side. The two-sided model is a model deployed on both sides, such as a model deployed on both the network device side and the terminal side, which requires collaboration between the network device and the terminal to achieve correct model inference operations of the two-sided model. A model deployed on both the network device side and the server side requires collaboration between the network device and the server to achieve correct model inference operations of the two-sided model.

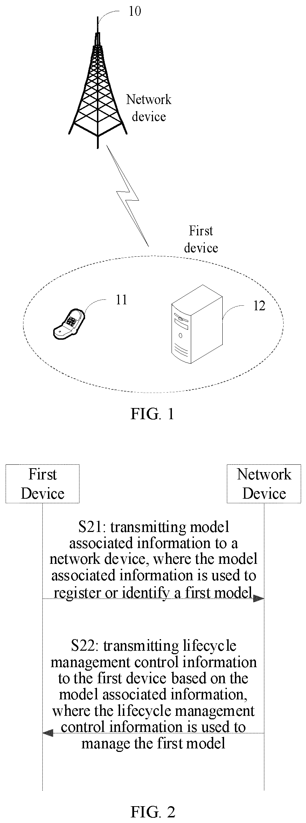

For example, it may be understood in conjunction with FIG. 1. FIG. 1 is a schematic diagram of an application scenario according to an embodiment of the present application. The application scenario includes a network device 10 and a first device, where the first device may be either a terminal 11 or a server 12.

In the network device 10, a one-sided model of the network device 10 may be deployed, or a part of a two-sided model belonging to the network device 10 may be deployed. Similarly, in the terminal 11, a one-sided model of the terminal 11 may be deployed, or a part of a two-sided model belonging to the terminal 11 may be deployed; in the server 12, a one-sided model of the server 12 may be deployed, or a part of a two-sided model belonging to the server 12 may be deployed.

A one-sided model deployed on the first device side, or the part of a two-sided model belonging to the first device side, may be trained in a private manner by a terminal and a chip manufacturer, or a third-party service provider, known as a private model of the first device, and is unknown to the network device, resulting in network device being unable to perform lifecycle management on the private model of the first device.

On this basis, the embodiments of the present application provide a method for model management, which achieves model lifecycle management by the network device by reporting model associated information to the network device. Solutions of the present application are introduced below in conjunction with the accompanying drawings.

FIG. 2 is a schematic flowchart of a method for model management according to an embodiment of the present application. As shown in FIG. 2, the method may include the following steps.

S21: a first device transmits model associated information to a network device, where the model associated information is used to register or identify a first model.

The first device in the embodiments of the present application may be a terminal, such as terminal 11 in the example of FIG. 1. The first device may also be a third-party server, such as server 12 in the example of FIG. 1.

To enable collaboration between the first device and the network device on a model, and to allow the network device to perform the lifecycle management on a one-sided model of the first device or a part belonging to the first device of a two-sided model, the first device may transmit the model associated information to the network device. The model associated information may be referred to as meta information of the model or model description information. The behavior of transmitting the model associated information may also be referred to as model registration, that is, the model associated information is used to register the first model. The behavior of transmitting the model associated information may also be referred to as model identification, that is, the model associated information is used to identify the first model.

The first model is a one-sided model of the first device, or a part of a two-sided model belonging to the first device. The model associated information may include one or more pieces of information associated with the first model. For example, the model associated information may include: information associated with the training dataset corresponding to the first model; performance associated information of the first model; pairing information of the first device and the network device on the two-sided model; and function information of the first model, etc. The first model may be an AI model, an ML model, or other possible types of models, which is not limited in this embodiment.

S22: the network device transmits lifecycle management control information to the first device based on the model associated information, where the lifecycle management control information is used to manage the first model.

After receiving the model associated information, the network device registers or identifies the first model. The network device transmits the lifecycle management control information to the terminal based on the model associated information to perform the lifecycle management on the first model in the first device.

Lifecycle management includes one or more of the following: model activation, model deactivation, model selection, model switching, fallback to a non-AI or a non-ML method, model monitoring, and model inference, etc. The first model is taken as an example, in case that the first model is activated, the activated first model may be used for model inference; in case that the first model is deactivated, the deactivated first model cannot be used for model inference; in case that the first model is switched to another model, for a current procedure of processing a task using the first model, the first model is replaced with another model to process the task; in case that the first model fallbacks to the non-AI or the non-ML model, for the current procedure of processing a task using the first model, the first model is changed with non-model (that is, non-AI or non-ML) to process the task; in case that the first model is monitored, the first model may be used for model monitoring; in case that the first model is inferred, the first model may be used for model inference, etc.

The management of the first model by the network device includes transmitting, to the first device, control information or indication information corresponding to the management. Model activation is taken as an example, the network device may transmit model activation indication information to the first device, indicating the first device to activate the first model, where the lifecycle management control information includes the model activation indication information. Model deactivation is taken as an example, the network device may transmit model deactivation indication information to the first device, indicating the first device to deactivate the first model, where the lifecycle management control information includes the model deactivation indication information. Model monitoring is taken as an example, the network device may transmit monitoring indication information of the first model to the first device, indicating the first device to measure an associated signal and feedback an associated measurement or inference result, and monitor the first model, where the lifecycle management control information includes the monitoring indication information of the first model. Model inference is taken as an example, the network device may transmit inference indication information of the first model to the first device, indicating the first device to measure an associated signal and feedback an associated inference result, and infer the first model, where the lifecycle management control information includes inference indication information of the first model.

The method for model management provided by the embodiments of the present application is performed by the first device, where the first device is a terminal or a server. The first device transmits the model associated information to the network device, and the model associated information is used to register or identify the first model; after receiving the model associated information, the network device transmits the lifecycle management control information to the first device based on the model associated information. The first device may manage the first model based on the lifecycle management control information. By reporting the model associated information to the network device, the first device enables the network device to perform reasonable lifecycle management on the first model of the first device after obtaining model associated information, which also promotes the collaboration between the first device and the network device on the first model and improves system performance.

On the basis of any of the above embodiments, the following provides a detailed introduction to the scheme of the embodiments of the present application.

The first device transmits the model associated information to the network device, and the network device performs the lifecycle management on the first model based on the model associated information.

In an embodiment, the first device may transmit the model associated information to the network device after transmitting first capability reporting information to the network device. The network device may receive the model associated information transmitted from the first device after receiving the first capability reporting information.

In an embodiment, the first device may transmit the first capability reporting information and the model associated information to the network device, that is, the first device simultaneously reports the first capability reporting information and the model associated information. The network device may simultaneously receive the first capability reporting information and the model associated information.

In an embodiment, the first device may transmit second capability reporting information to the network device, where the second capability reporting information includes the model associated information. After receiving the second capability reporting information, the network device obtains the model associated information based on the second capability reporting information.

In an embodiment, the network device may transmit model registration indication information to the first device, where the model registration indication information is used to indicate the first device to perform model registration, that is, indicate the first device to transmit the model associated information. After receiving the model registration indication information, the first device transmits the model associated information to the network device based on the model registration indication information.

In an embodiment, the network device may transmit model identification indication information to the first device, where the model identification indication information is used to indicate the first device to perform model identification, that is, indicate the first device to transmit the model associated information. After receiving the model identification indication information, the first device transmits the model associated information to the network device based on the model identification indication information.

In the above embodiments, occasion for the first device to transmit the model associated information is introduced, and the specific content of the model associated information is introduced below. It should be noted that in the various embodiments of the present application, the first device may be a terminal or a third-party server. The first device may interact with the network device, and the server is a different device from the network device in the embodiments of the present application. For example, the first model may be an AI model, an ML model, or other possible models.

In an embodiment, the model associated information transmitted from the first device to the network device includes information associated with the training dataset corresponding to the first model. The training dataset is a dataset used in a procedure for training the first model.

The information associated with the training dataset corresponding to the first model may include at least one of the following (1.1) - (1.4).

### (1.1) Nature or source information of the training dataset

The nature or source information of the training dataset refers to information associated with the nature or source of the training dataset.

The nature or source information of the training dataset may be used to indicate that the training dataset is a training dataset indicated by the network device. For example, the training dataset may be a training dataset broadcast by the network device or a training dataset unicast by the network device.

The nature or source information of the training dataset may be used to indicate that the training dataset is a predefined training dataset. For example, the training dataset is a training dataset available to some servers (such as publicly available servers), where the server may be server 12 in the example of FIG. 1 or other servers.

The nature or source information of the training dataset may be used to indicate that the training dataset is a training dataset used by the terminal, where the source of the training dataset is the terminal.

The nature or source information of the training dataset may be used to indicate that the training dataset is a training dataset used by the server, where the source of the training dataset is the server.

It should be noted that in case that the first device is a terminal, the training dataset may be a training dataset used by the terminal or a training dataset used by the server; in case that the first device is a server, the training dataset may be a training dataset used by the terminal or a training dataset used by the server.

### (1.2) An identifier of the training dataset

The identifier of the training dataset is used to indicate the training dataset, and the identifiers of different training datasets are also different. The training dataset corresponding to the first model may be determined based on the identifier of the training dataset corresponding to the first model.

### (1.3) Attribute information of the training dataset

The attribute information of the training dataset is used to represent the attribute of the training dataset. In the embodiments of the present application, the attribute information of the training dataset may include a quantity of the training dataset or a size of the training dataset.

The quantity of the training dataset may be one or multiple. For any of the training datasets, the attribute information of the training dataset may also include the size of the training dataset.

### (1.4) Information associated with data collection of the training dataset

The information associated with data collection of the training dataset may include information associated with a collection location of the training dataset; information associated with a collection configuration of the training dataset; and information associated with a collection scenario of the training dataset.

The information associated with the collection location of the training dataset is used to indicate the location where the training dataset is collected. For example, if the training dataset is collected at a certain location or network device, the information associated with the collection location may include the location or the identifier of the network device, etc.

The information associated with the collection configuration of the training dataset is used to indicate the configuration for collecting the training dataset. For example, the information associated with the collection configuration indicates to collect the training dataset under a certain terminal antenna configuration, or the information associated with the collection configuration indicates to collect the training dataset under a certain network device antenna configuration, etc.

The information associated with the collection scenario of the training dataset is used to indicate the scenario for collecting the training dataset. For example, the information associated with the collection scenario indicates a training dataset collected in indoor scenario, or the information associated with the collection scenario indicates a training dataset collected in urban scenario, or the information associated with the collection scenario indicates a training dataset collected in rural scenario, etc.

After receiving the information associated with the training dataset transmitted from the first device, the network device may determine the applicable scenario of the first model based on the information associated with the training dataset. In case that the data collected in the current scenario is matched with the training dataset of the first model, the network device transmits the lifecycle management control information to the first device to activate the first model. In case that the data collected in the current scenario mismatches the training dataset of the first model, the network device transmits the lifecycle management control information to the first device, switches the first model to other models to process the task, or fallbacks to a non-model method to process the task.

In the procedure of training the first model through the training dataset, what the first model learns is an internal relationship between the input data and the output label of the training dataset. In the embodiments of the present application, the network device may determine the training dataset used by the first model in the first device through the information associated with the training dataset corresponding to the first model reported from the first device, and then may determine one or more of the functions of the first model, an input format of the first model, an output format of the first model, or the application scenario of the first model, etc. Based on one or more of the functions of the first model, the input format of the first model, the output format of the first model, or the application scenario of the first model, the network equipment may perform reasonable lifecycle management on the first model. When appropriate, the system performance may be improved through the first model. When not appropriate, the system performance may be prevented from declining due to the wrong use of the first model.

In an embodiment, the model associated information transmitted from the first device to the network device includes information associated with performance of the first model. The information associated with performance of the first model includes at least one of the following (2.1) - (2.2).

### (2.1) Performance of the model

The performance of the model may be characterized through corresponding performance indicators. In an embodiment, the performance of the model may include at least one of a first performance indicators associated with the inferred output of the first model, a second performance indicator associated with communication performance of applying the first model in the communication system, and a third performance indicator of the first model *per se.*

For the first performance indicator, since the first performance indicator characterizes the performance indicator associated with the inferred output of the first model, and the corresponding inferred outputs are also different for models with different functions, the corresponding first performance indicator is also different for the first model used in different inference procedures. The inference procedure applied by the first model may include channel state information (CSI) compression feedback, CSI prediction, beam management, and positioning, etc.

The CSI is a channel attribute of a communication link, used to describe an attenuation factor of a signal on the channel, such as signal scattering, distance attenuation, etc. The CSI compression feedback refers to channel compression and restoration based on CSI. This procedure may be completed through the first model, other models, or non-model methods.

In case that the first model is used for CSI compression feedback, the CSI may be input into the first model, and the CSI may be processed by the first model to obtain the channel restored after being compressed using the first model. In this scenario, the first performance indicator may include similarity between a first channel and a channel compressed and restored by the first model.

The first channel may be an ideal channel or a high-precision channel. The similarity between the first channel and the channel compressed and restored by the first model may be, for example, a squared generalized cosine similarity (SGCS) between the first channel and the channel compressed and restored by the first model, or other parameters that may represent the similarity between the first channel and the channel compressed and restored by the first model, which is not limited by the embodiments of the present application.

The CSI prediction refers to the procedure of predicting a channel based on CSI and obtaining the predicted channel. This procedure may be completed through the first model, other models, or non-model methods.

In case that the first model is used for CSI prediction, the CSI may be input into the first model and processed by the first model to obtain a channel predicted by the first model. In this scenario, the first performance indicator may include similarity between a first channel and a channel predicted by the first model. The first channel may be an ideal channel or a high-precision channel. The similarity between the first channel and the channel predicted by the first model may be the SGCS between the first channel and the channel predicted by the first model, or other parameters that may represent the similarity between the first channel and the channel predicted by the first model, which is not limited by the embodiments of the present application.

The beam management refers to the procedure of performing beam management in a communication system, such as in a communication system that includes multiple beams. By inferring and predicting these multiple beams, appropriate beams are selected for communication between the terminal and the network device. This procedure may be completed through the first model, other models, or non-model methods.

In case that the first model is used for beam management, associated parameters of each beam may be input into the first model, and the first model processes the associated parameters of each beam and outputs the beams inferred and predicted by the first model.

In this scenario, the first performance indicator may include a probability that a beam inferred and predicted by the first model is a target beam, and may also include a difference between reference signal receiving power (RSRP) of the inferred and predicted beam and RSRP of the target beam. For example, the target beam may be an actual optimal beam, and the beam inferred and predicted by the first model is an optimal beam inferred and predicted.

The greater the probability that the beam predicted by the first model inference is the target beam, the higher the accuracy of the inference and predication of the first model, and the better the first performance indicator; the smaller the probability that the beam predicted by the first model inference is the target beam, the lower the accuracy of the inference and predication of the first model, and the worse the first performance indicator.

Similarly, the smaller the difference between the RSRP of the beam predicted by the first model inference and the RSRP of the target beam, the higher the accuracy of the inference and predication of the first model, and the better the first performance indicator; the greater the difference between the RSRP of the beam predicted by the first model inference and the RSRP of the target beam, the lower the accuracy of the inference and predication of the first model, and the worse the first performance indicator.

Positioning is mainly the procedure of positioning a terminal in a communication system between the terminal and the network device. For example, in a communication system, positioning refers to determining the current location of a terminal, or determining a location of a terminal after a certain period of time, etc. This procedure may be completed through the first model, other models, or non-model methods.

In case that the first model is used for positioning, the first performance indicator may include a difference between an actual intermediate variable and an intermediate variable inferred by the first model, where the intermediate variable is a variable in the procedure of obtaining the location of the terminal, and the intermediate variable may be, for example, time of arrival (ToA). The first performance indicator may also include accuracy of a line of sight (LoS) and/or non-line of sight (NLoS) inferred by the first model.

As for the second performance indicator, because the second performance indicator represents the performance indicator associated with the communication performance of the first model being applied in the communication system, and for models with different functions, their corresponding inferred outputs are also different, resulting in different changes in communication performance. Therefore, for the first model used in different inference procedures, the corresponding second performance indicator is also different. The inference procedure applied with the first model may include CSI compression feedback, CSI prediction, beam management, and positioning, etc.

In case that the first model is used for CSI compression feedback, the second performance indicator may include a change in system throughput after CSI compression feedback is performed using the first model, where the change in system throughput may include a degree of increase or decrease of the system throughput, and may also include a proportion of increase or decrease of the system throughput.

In case that the first model is used for CSI compression feedback, the second performance indicator may also include a change in required signal to interference plus noise ratio (SINR) under a same bit error rate after beam management is performed using the first model, where the change in SINR may include a degree of increase or decrease of the SINR, etc.

In case that the first model is used for CSI prediction, the second performance indicator may include a change in system throughput after CSI prediction is performed using the first model, where the change in system throughput may include a degree of increase or decrease of the system throughput, and may also include a proportion of increase or decrease of the system throughput.

In case that the first model is used for CSI prediction, the second performance indicator may also include a change in required SINR under a same bit error rate after CSI prediction is performed using the first model, where the change in SINR may include a degree of increase or decrease of the SINR, etc.

In case that the first model is used for beam management, the second performance indicator may include a change in system throughput after beam management is performed using the first model, where the change in system throughput may include a degree of increase or decrease of the system throughput, and may also include a proportion of increase or decrease of the system throughput.

In case that the first model is used for beam management, the second performance indicator may also include a change in required SINR under a same bit error rate after beam management is performed using the first model, where the change in SINR may include a degree of increase or decrease of the SINR, etc.

In case that the first model is used for positioning, the second performance indicator is deviation between an actual location and a location inferred by the first model. Positioning of the terminal is taken an example, the first model outputs an inferred location of the terminal. The smaller the deviation from the actual location of the terminal, the more accurate the first model positioning is. The larger the deviation from the actual location of the terminal, the more inaccurate the first model positioning is.

The third performance indicator is the performance indicator of the first model *per se,* which is used to characterize the performance of the first model *per se.* The third performance indicator includes at least one of reference time required for performing one inference using the first model; complexity of the first model; generalization performance of the first model; or an information value of the first model.

The reference time required for performing one inference using the first model may be time taken by performing one inference through the first model, average time spent on a single inference obtained by performing inference for many times through the first model, or time spent on a single inference by the first model under a specific operating condition, where the specific operating condition may be, for example, a scenario that only the first model is activated, or a scenario that all other models are deactivated, etc.

The complexity of the first model may be represented by the size of the first model. The larger the first model, the higher the complexity of the first model. The complexity of the first model may also be characterized by an amount of calculation required for a single inference of the first model. The greater the amount of calculation, the higher the complexity of the first model. The smaller the amount of calculation, the lower the complexity of the first model.

The generalization performance of the first model mainly represents the impact of application of the first model in different scenarios, configurations or locations on the performance of the first model. The generalization performance of the first model may be characterized by the validation information of the first model in different scenarios, the validation information of the first model in different configurations, and the validation information of the first model in different locations, etc.

The information value of the first model is used to indicate the performance of the first model, and the information value may include a hard information value and a soft information value. A range of the information value being between [0,1] is taken as an example, where 0 and 1 are hard information values, and other values between 0 and 1 are soft information values. The higher the information value, the better the performance of the first model. On the contrary, the lower the information value, the worse the performance of the first model.

### (2.2) A source of the performance associated information

The source of performance associated information is used to indicate that the performance associated information is at least one of the following.

The source of performance associated information is used to indicate that the performance associated information is performance associated information estimated by the first device.

The source of performance associated information is used to indicate that the performance associated information is performance associated information tested by the first device, such as the performance associated information obtained after the first model is verified by a validation dataset or a test dataset.

The source of the performance associated information is used to indicate that the performance associated information is performance associated information detected through the network device, where the network device detecting the performance associated information may be the network device receiving the model associated information, or other network devices. FIG. 1 is taken as an example, the network device detecting performance associated information may be network device 10, or any other possible network device besides network device 10. After obtaining the performance associated information of the first model using the first model, the network device may feed back the performance associated information of the first model to the first device, and the first device may obtain the performance associated information of the first model.

The source of performance associated information is used to indicate that the performance associated information is pre-evaluated performance associated information, such as performance associated information evaluated by a third-party organization. The third-party organization is an independent evaluation agency independent from the first device and the network device.

After receiving the performance associated information of the first model transmitted from the first device, the network device determines a gain of the first model of the first device, and determines whether the first model of the first device is worth activating. In case that determining that the gain brought by the first model is large, the network device may transmit the lifecycle management control information to indicate the first device to activate the first model; in case that determining that the gain of the first model is not large, the network device may transmit the lifecycle management control information to indicate the first device to deactivate the first model, and/or fallback to the non-model function.

Therefore, in the scheme of the embodiments of the present application, the network device may know the performance of the registered or identified first model in advance through the first device reporting the performance associated information of the first model, which is conducive to the network device determining whether the first model is scheduled and used, and performing appropriate lifecycle management. In case that the gain of the first model is large, the network device may indicate the first device to activate the first model to improve the system performance. In case that the gain of the first model is not large, the network device may indicate the first device to deactivate the first model to reduce the power consumption overhead, computing overhead and storage overhead generated when the first model runs.

In an embodiment, the model associated information transmitted from the first device to the network device includes quantization information of an input and/or an output of the first model. The quantization information of the input and/or the output of the first model includes at least one of the following (3.1) - (3.4).

### (3.1) Quantization type information

The quantization type information is used to represent a type of quantization information input and/or output from the first model. In case that quantization is performed, the quantization type information may include quantization metric associated information, where quantization may be scalar quantization or vector quantization. In case that the quantization is scalar quantization, the quantization type information may be used to indicate whether it is uniform quantization or non-uniform quantization. In case that the quantization is vector quantization, the quantization type information may include information associated with a vector used for quantization.

The quantization type information may also include quantization method information, such as a quantization interval, a quantity of quantization bit, etc.

### (3.2) Normalization associated information

Normalization associated information is used to indicate whether to normalize the input and/or the output of the first model.

In case that it is determined to normalize the input and/or the output of the first model, a normalization method may be included in the normalization associated information to indicate how to normalize the input and/or the output of the first model. The normalization method may include, for example, first-order normalization, and second-order normalization, etc.

### (3.3) A unit of input of the first model

The unit of input of the first model is mainly used to limit an input format of the first model, where the input unit may include, for example, a logarithmic value, and a linear value, etc.

### (3.4) A unit of output of the first model

The unit of output of the first model is mainly used to limit an output format of the first model, where the output unit may include, for example, a logarithmic value, and a linear value, etc.

After receiving the quantization information input and/or output from the first model transmitted from the first device, the network device determines a quantization manner of the required for the input and/or output of the first model of the first device, which provides the first device with an appropriate input data format, or to de-quantize the output of the first model of the first device through an appropriate manner.

In case that the first device does not report the quantization information, the first model of the first device side may only use a predefined quantization method, which limits the design flexibility thereof. In the scheme of the embodiments of the present application, the first device does not need to use the predefined quantization method by reporting quantization information to the network device in case of model registration or identification, but may select an appropriate quantization method based on its own computing capability to improve the performance of the first model, and also enable the network device to know the quantization of the input/output of the first model of the first device side, and to properly process the output result of the first model. For example, the first device may be provided with an appropriate input data format, and may reverse quantize the output of the first model through an appropriate manner, and maximize the performance of the first model. For the two-sided model, the quantization information may better align the quantization scale of the first device side and the network device side, which avoids the degradation of the performance of the first model.

In an embodiment, the model associated information transmitted from the first device to the network device includes information associated with coexistence capability of the first model. The information associated with the coexistence capability of the first model includes at least one of the following (4.1) - (4.2).

### (4.1) First information associated with the coexistence capability

The first information associated with the coexistence capability is used to indicate a model allowed to be activated simultaneously with the first model, or a model not allowed to be activated simultaneously with the first model.

In an embodiment, the first information associated with the coexistence capability includes a list of models allowed to be activated simultaneously with the first model, where the list of models allowed to be activated simultaneously with the first model includes one or more models. One or more models in the model list are allowed to be activated simultaneously with the first model, that is, these one or more models are not affected by the first model.

In an embodiment, the first information associated with the coexistence capability includes a list of models not allowed to be activated simultaneously with the first model, where the list of models not allowed to be activated simultaneously with the first model includes one or more models. One or more models in the model list are not allowed to be activated simultaneously with the first model, that is, these one or more models are affected by the first model.

In an embodiment, the first information associated with the coexistence capability includes a first bitmap, where each bit in the first bitmap is used to indicate whether a corresponding model is allowed to be activated simultaneously with the first model. For example, for any model, the model includes a corresponding bit, and a value of the bit is 0 or 1; 0 means that the model is allowed to be activated simultaneously with the first model, that is, the model is not affected by the first model; 1 means that the model is not allowed to be activated simultaneously with the first model, that is, the model is affected by the first model.

In an embodiment, the first information associated with the coexistence capability includes first indication information, where the first indication information is used to indicate whether a model not allowed to be activated simultaneously with the first model is present. For example, a value of the first indication information may be used to determine whether a model not allowed to be activated simultaneously with the first model is present, that is, whether a model affected by the first model is present. In case that there is at least one model not allowed to be activated simultaneously with the first model, the value of the first indication information is 0. In case that there is no model not allowed to be activated simultaneously with the first model, the value of the first indication information is 1.

### (4.2) Second information associated with the coexistence capability

Second information associated with the coexistence capability is used to indicate a non-model function allowed to be used simultaneously with the first model, or a non-model function not allowed to be used simultaneously with the first model.

In an embodiment, the second information associated with the coexistence capability includes a list of non-model functions allowed to be used simultaneously with the first model. The list of non-model functions allowed to be used simultaneously with the first model includes one or more non-model functions. One or more non-model functions in the model list are allowed to be activated simultaneously with the first model, that is, these one or more non-model functions are not affected by the first model.

In an embodiment, the second information associated with the coexistence capability includes a list of non-model functions not allowed to be used simultaneously with the first model. The list of non-model functions not allowed to be used simultaneously with the first model includes one or more non-model functions. One or more non-model functions in the model list are not allowed to be activated simultaneously with the first model, that is, these one or more non-model functions are affected by the first model.

In an embodiment, the second information associated with the coexistence capability includes a second bitmap, where each bit in the second bitmap is used to indicate whether a corresponding non-model function is allowed to be activated simultaneously with the first model. For example, for any non-model function, the non-model function includes a corresponding bit, and the value of the bit is 0 or 1; 0 means that the non-model function is allowed to be activated simultaneously with the first model, that is, the non-model function is not affected by the first model; 1 means that the non-model function is not allowed to be activated simultaneously with the first model, that is, the non-model function is affected by the first model.

In an embodiment, the second information associated with the coexistence capability includes second indication information, where the second indication information is used to indicate whether a non-model function not allowed to be activated simultaneously with the first model is present. For example, a value of the second indicator may be used to determine whether a non-model function not allowed to be activated simultaneously with the first model is present, that is, whether a non-model function affected by the first model is present. In case that there is at least one non-model function not allowed to be activated simultaneously with the first model, the value of the second indicator is 0. In case that there is no non-model function not allowed to be activated simultaneously with the first model, the value of the first indication information is 1.

After receiving the information associated with the coexistence capability, the network device may determine the model or non-model function not allowed to be used together with the first model of the first device. Therefore, in case that the network device indicates the first device to activate the first model, or before activating the first model, the network device may first indicate to deactivate the model not allowed to be used together with the first model, or avoid configuring or indicating the first device to use the non-model function not allowed to be used together with the first model, and avoid the network device mistakenly requiring the first device to run the first model and other model or non-model functions not allowed to be used together.

Therefore, in the scheme of the embodiments of the present application, the network device is allowed to determine the model allowed to be activated simultaneously with the first model, the model not allowed to be activated simultaneously with the first model, the non-model function allowed to be used simultaneously with the first model, and the non-model function not allowed to be used simultaneously with the first model, etc., by the first device reporting the information associated with the coexistence capability. The network device may perform lifecycle management more appropriately, control the activation, deactivation, and fallback to the non-model function of the first model, etc., to avoid the problem that the first device acts unpredictably and damages the performance of the first device and the network device because the first device activates the model not allowed to be used together with the first model, or runs the non-model function not allowed to be used together with the first model.

In an embodiment, the model associated information transmitted from the first device to the network device includes information associated with one or more second models corresponding to the first model, where the second model is a model of the network device. In an embodiment, the second model is a model associated with the first model. For the two-sided model scenario, the first model is the part of the two-sided model deployed on the first device side, and the second model is the part of the two-sided model deployed on the network device side. Information associated with the second model includes at least one of the following (5.1) - (5.5).

### (5.1) An index of the second model

The index of the second model is used to identify the second model. After the first device reports the index of the second model, the network device may determine the second model based on the index of the second model.

### (5.2) An application scenario corresponding to the second model.

The application scenario corresponding to the second model is used to characterize a scenario applicable to the second model. After the first device reports the application scenario corresponding to the second model, the network device may determine the second model based on the application scenario corresponding to the second model.

### (5.3) A configuration corresponding to the second model

The configuration corresponding to the second model is used to characterize the configuration applicable to the second model. After the first device reports the configuration corresponding to the second model, the network device may determine the second model based on the configuration corresponding to the second model.

### (5.4) An address corresponding to the second model

After the first device reports the address corresponding to the second model, the network device may determine the second model based on the address corresponding to the second model.

### (5.5) Performance associated information of the second model

The performance associated information of the second model is used to characterize the performance of the second model, and may also be used to characterize the performance of the first model and the second model when collaboratively used. The performance of the second model may be characterized by corresponding performance indicators. The performance indicators corresponding to the performance of the second model may be referred to the relevant introduction of the performance indicators corresponding to the performance of the first model in the above embodiment, which are not repeated here.

In an embodiment, the second model is trained by the first device and transmitted to the network device, and the first device may also determine the second model, and then transmit the information associated with the second model to the network device.

In an embodiment, the second model is trained by the network device, the first model is trained by the first device, and the training dataset of the first model is transmitted from the network device to the first device. Each training dataset corresponds to a second model on the network device side, and the first device may determine the second model, and then transmit the information associated with the second model to the network device.

In an embodiment, the second model is a predefined model or a model indicated by the network device. In an embodiment, reference models are determined in a predefined manner or is indicated by the network device. The first device determines the second model matched with the first model among the reference models based on the performance matching degree between the first model and each reference model, and then transmits the information associated with the second model to the network device.

After receiving the information associated with the second model transmitted from the first device, the network device determines the second model on the network device side that matches with the first model of the first device side in the two-sided model, and selects the second model that enables the optimal combination of the first device and the network device in the use of the two-sided model. Therefore, in the scheme of the embodiments of the present application, it may assist the network device to determine to use the appropriate second model on the network device side to match the first model of the first device side, avoiding blindly using the model on the network device side, or using multiple models on the network device side to try to match the first model at the same time, resulting in unnecessary computing power and power consumption overhead, and improving system performance.

After receiving the model associated information, the network device may transmit the lifecycle management control information to the first device based on the model associated information to perform lifecycle management on the first model. The lifecycle management control information may include at least one of activation indication information of the first model; deactivation indication information of the first model; model selection indication information; model switching indication information; indication information for fallback to a non-model function; monitoring indication information of the first model; or inference indication information of the first model.

The activation indication information of the first model is used to activate the first model; the deactivation indication information of the first model is used to deactivate the first model; the model selection indication information is used to indicate the selection of a certain model for task processing; the model switching indication information is used for model switching; the indication information for fallback to a non-model function is used to indicate the fallback to the non-model function, such as a fallback to a non-AI or a non-ML method; the monitoring indication information of the first model is used to indicate the monitoring of the first model; the inference indication information of the first model is used for inference of the first model, etc. The specific content included in the lifecycle management control information may be determined by the network device based on the model associated information, and is not limited in this embodiment.

In the methods for model management provided in the embodiments of the present application, by the first device transmitting the model associated information to the network device, the network device may know the information associated with the first model of the first device side, and perform reasonable lifecycle management based on the information associated with the first model, assisting the collaboration between the network device and the first device on the first model, and improving the system performance.

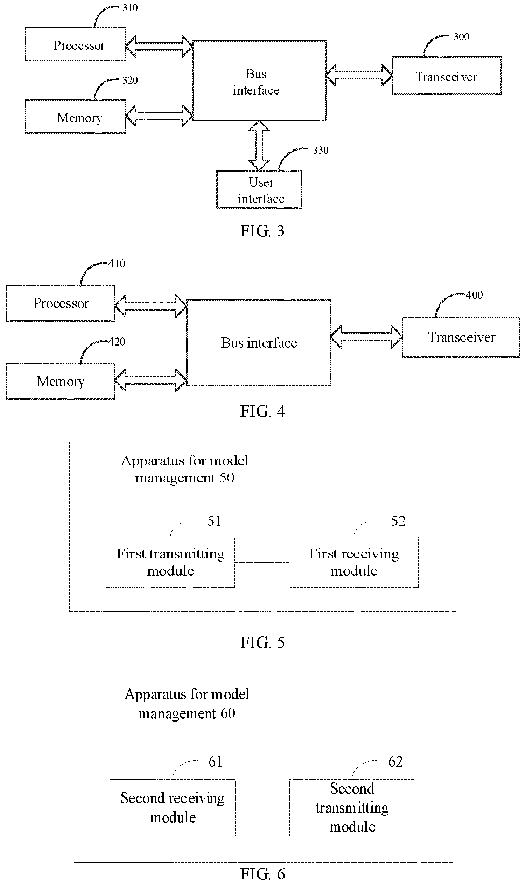

FIG. 3 is a schematic structural diagram of a first device according to an embodiment of the present application. As shown in FIG. 3, the first device includes a memory 320, a transceiver 300, and a processor 310, where
the memory 320 is used for storing a computer program, the transceiver 300 is used for receiving and transmitting data under control of the processor, and the processor 310 is used for reading the computer program in the memory and performing the following operations:
transmitting model associated information to a network device, where the model associated information is used to register or identify a first model; and
receiving lifecycle management control information transmitted from the network device, where the lifecycle management control information is used to manage the first model.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, which are well known in the art, and therefore will not be further described in the present application. The bus interface provides an interface. The transceiver 300 may include multiple elements, i.e., include a transmitter and a receiver, units for providing communication with various other devices over transmission media including wireless channels, wired channels, fiber optic cables, and the like. For different user equipment, a user interface 330 may be an interface capable of externally or internally connecting the required device, and the connected device includes, but not limited to, a keypad, a display, a speaker, a microphone, a joystick, and the like.

The processor 310 is responsible for managing the bus architecture and general processing, and the memory 320 may store data used by the processor 310 when performing operations.

In some embodiments, the processor 310 may be a central processing unit (CPU), an application specific integrated circuit (ASIC), a field-programmable gate array (FPGA), or a complex programmable logic device (CPLD). The processor may also use a multi-core architecture.

The processor is configured to perform any one of the methods of the embodiments of the present application based on an obtained executable instruction by calling the computer program stored in the memory. The processor and memory may also be physically separated.

In an embodiment, the model associated information includes at least one of the following:
information associated with a training dataset corresponding to the first model;
performance associated information of the first model;
quantization information of an input and/or an output of the first model;
information associated with coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where each bit in the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where each bit in the second bitmap is used to indicate whether a corresponding non-model function is allowed to be used simultaneously with the first model; or
   second indication information, where the second indication information is used to indicate whether a non-model function not allowed to be used simultaneously with the first model is present.

**In** an embodiment, the information associated with the second model includes at least one of the following:
an index of the second model;
an application scenario corresponding to the second model;
a configuration corresponding to the second model;
an address corresponding to the second model; or
performance associated information of the second model.

**In** an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

**In** an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
inference indication information of the first model.

**In** an embodiment, transmitting the model associated information to the network device includes at least one of the following:
transmitting the model associated information to the network device after transmitting first capability reporting information to the network device;
transmitting first capability reporting information and the model associated information to the network device;
transmitting second capability reporting information to the network device, where the second capability reporting information includes the model associated information; or
receiving model registration indication information or model identification indication information transmitted from the network device, and transmitting the model associated information to the network device based on the model registration indication information or the model identification indication information.

In an embodiment, the processor is further used for reading the computer program from the memory and performing the following operations:
reporting an inference result of the first model to the network device.

It should be noted that the first device provided in the embodiments of the present application is capable of implementing all method steps implemented by the method embodiment with the first device as the performing subject, and may achieve the same technical effects. Therefore, specific descriptions of the same parts and beneficial effects as the method embodiment in this embodiment are not repeated here.

FIG. 4 is a schematic structural diagram of a network device according to an embodiment of the present application. As shown in FIG. 4, the network device includes a memory 420, a transceiver 400, and a processor 410, where
the memory 420 is used for storing a computer program, the transceiver 400 is used for receiving and transmitting data under control of the processor, and the processor 410 is used for reading the computer program in the memory and performing the following operations:
receiving model associated information transmitted from a first device, where the model associated information is used to register or identify a first model, and the first device is a terminal or a server; and
transmitting lifecycle management control information to the first device based on the model associated information, where the lifecycle management control information is used to manage the first model.

In an embodiment, the transceiver 400 is used to receive and transmit data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may include multiple elements, i.e., include a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

In an embodiment, the processor 410 may be a CPU, ASIC, FPGA, or CPLD, and the processor may also adopt a multi-core architecture.

The processor is configured to perform any one of the methods of the embodiments of the present application based on an obtained executable instruction by calling the computer program stored in the memory. The processor and memory may also be physically separated.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
inference indication information of the first model.

In an embodiment, receiving the model associated information transmitted from the first device includes at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, where the second capability reporting information includes the model associated information; or
transmitting model registration indication information or model identification indication information to the first device, and receiving the model associated information transmitted from the first device based on the model registration indication information or the model identification indication information.

In an embodiment, the processor is further used for reading the computer program from the memory and performing the following operations:
receiving an inference result of the first model reported from the first device.

It should be noted that the network device provided in the embodiments of the present application is capable of implementing all method steps implemented by the method embodiment with the network device as the performing subject, and may achieve the same technical effects. Therefore, specific descriptions of the same parts and beneficial effects as the method embodiment in this embodiment are not repeated here.

FIG. 5 is a first schematic structural diagram of an apparatus for model management according to an embodiment of the present application. As shown in FIG. 5, the apparatus 50 for model management includes:
a first transmitting module 51, used for transmitting model associated information to a network device, where the model associated information is used to register or identify a first model; and
a first receiving module 52, used for receiving lifecycle management control information transmitted from the network device, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

In an embodiment, the first information associated with the coexistence capability includes at least one of the following:
a list of models allowed to be activated simultaneously with the first model;
a list of models not allowed to be activated simultaneously with the first model;
a first bitmap, where each bit in the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where each bit in the second bitmap is used to indicate whether a corresponding non-model function is allowed to be used simultaneously with the first model; or
   second indication information, where the second indication information is used to indicate whether a non-model function not allowed to be used simultaneously with the first model is present.

In an embodiment, the information associated with the second model includes at least one of the following:
an index of the second model;
an application scenario corresponding to the second model;
a configuration corresponding to the second model;
an address corresponding to the second model; or
performance associated information of the second model.

In an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
inference indication information of the first model.

In an embodiment, the first transmitting module 51 is further used for at least one of the following:
transmitting the model associated information to the network device after transmitting first capability reporting information to the network device;
transmitting first capability reporting information and the model associated information to the network device;
transmitting second capability reporting information to the network device, where the second capability reporting information includes the model associated information; or
receiving model registration indication information or model identification indication information transmitted from the network device, and transmitting the model associated information to the network device based on the model registration indication information or the model identification indication information.

In an embodiment, the first transmitting module 51 is further used for:
reporting an inference result of the first model to the network device.

It should be noted that the apparatus for model management provided in the embodiments of the present application is capable of implementing all method steps implemented by the method embodiment with the first device as the performing subject, and may achieve the same technical effects. Therefore, specific descriptions of the same parts and beneficial effects as the method embodiment in this embodiment are not repeated here.

FIG. 6 is a second schematic structural diagram of an apparatus for model management according to an embodiment of the present application. As shown in FIG. 6, the apparatus 60 for model management includes:
a second receiving module 61, used for receiving model associated information transmitted from a first device, where the model associated information is used to register or identify a first model, and the first device is a terminal or a server; and
a second transmitting module 62, used for transmitting lifecycle management control information to the first device based on the model associated information, where the lifecycle management control information is used to manage the first model.

In an embodiment, the model associated information includes at least one of the following:
information associated with a training dataset corresponding to the first model;
performance associated information of the first model;
quantization information of an input and/or an output of the first model;
information associated with coexistence capability of the first model; or
information associated with one or more second models corresponding to the first model, where the second model is a model of the network device.

In an embodiment, the information associated with the training dataset corresponding to the first model includes at least one of the following:
nature or source information of the training dataset;
an identifier of the training dataset;
attribute information of the training dataset; or
information associated with data collection of the training dataset.

In an embodiment, the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset includes at least one of the following:
   a quantity of the training dataset; or
   a size of the training dataset; and
   the information associated with data collection of the training dataset includes at least one of the following:
      information associated with a collection location of the training dataset;
      information associated with a collection configuration of the training dataset; or
      information associated with a collection scenario of the training dataset.

In an embodiment, the performance associated information includes performance of a model and/or a source of the performance associated information, where
the performance of the model includes at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
   performance associated information estimated by the first device;
   performance associated information tested by the first device;
   performance associated information detected through the network device; or
   pre-evaluated performance associated information.

In an embodiment, the first performance indicator is any of the following:
in case that the first model is used for channel state information (CSI) compression feedback, the first performance indicator includes similarity between a first channel and a channel compressed and restored by the first model;
in case that the first model is used for channel state information (CSI) prediction, the first performance indicator includes similarity between a first channel and a channel predicted by the first model;
in case that the first model is used for beam management, the first performance indicator includes: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator includes: a difference between an actual intermediate variable and an intermediate variable inferred by the first model, and/or accuracy of a line of sight and/or non-line of sight inferred by the first model;
the second performance indicator is any of the following:
   in case that the first model is used for CSI compression feedback, the second performance indicator includes: a change in system throughput after CSI compression feedback is performed using the first model, and/or a change in required signal to interference plus noise ratio (SINR) under a same bit error rate after CSI compression feedback is performed using the first model;
   in case that the first model is used for CSI prediction, the second performance indicator includes: a change in system throughput after CSI prediction is performed using the first model, and/or a change in required signal to interference plus noise ratio (SINR) under a same bit error rate after CSI prediction is performed using the first model;
   in case that the first model is used for beam management, the second performance indicator includes: a change in system throughput after beam management is performed using the first model, and/or a change in required signal to interference plus noise ratio (SINR) under a same bit error rate after beam management is performed using the first model; or
   in case that the first model is used for positioning, the second performance indicator is deviation between an actual position and a position inferred by the first model; and
   the third performance indicator includes at least one of the following:
      reference time required for performing one inference using the first model;
      complexity of the first model;
      generalization performance of the first model; or
      an information value of the first model, where the information value is used to indicate performance of the first model.

In an embodiment, the quantization information includes at least one of the following:
quantization type information, where the quantization type information includes quantization metric associated information and/or quantization method information;
normalization associated information, where the normalization associated information is used to indicate whether to normalize the input and/or the output of the first model;
a unit of the input of the first model; or
a unit of the output of the first model.

In an embodiment, the information associated with the coexistence capability includes at least one of the following:
first information associated with the coexistence capability, where the first information associated with the coexistence capability is used to indicate a model allowed to be activated simultaneously with the first model, or a model not allowed to be activated simultaneously with the first model; or
second information associated with the coexistence capability, where the second information associated with the coexistence capability is used to indicate a non-model function allowed to be used simultaneously with the first model, or a non-model function not allowed to be used simultaneously with the first model.

**In** an embodiment, the first information associated with the coexistence capability includes at least one of the following:
a list of models allowed to be activated simultaneously with the first model;
a list of models not allowed to be activated simultaneously with the first model;
a first bitmap, where the first bitmap is used to indicate whether a corresponding model is allowed to be activated simultaneously with the first model; or
first indication information, where the first indication information is used to indicate whether a model not allowed to be activated simultaneously with the first model is present; and
the second information associated with the coexistence capability includes at least one of the following:
   a list of non-model functions allowed to be used simultaneously with the first model;
   a list of non-model functions not allowed to be used simultaneously with the first model;
   a second bitmap, where the second bitmap is used to indicate whether a corresponding non-model function is allowed to be used simultaneously with the first model; or
   second indication information, where the second indication information is used to indicate whether a non-model function not allowed to be used simultaneously with the first model is present.

**In** an embodiment, the information associated with the second model includes at least one of the following:
an index of the second model;
an application scenario corresponding to the second model;
a configuration corresponding to the second model;
an address corresponding to the second model; or
performance associated information of the second model.

**In** an embodiment, the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

In an embodiment, the lifecycle management control information includes at least one of the following:
activation indication information of the first model;
deactivation indication information of the first model;
model selection indication information;
model switching indication information;
indication information for fallback to a non-model function;
monitoring indication information of the first model; or
inference indication information of the first model.

In an embodiment, the second receiving module 62 is further used for at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, where the second capability reporting information includes the model associated information; or
transmitting model registration indication information or model identification indication information to the first device, and receiving the model associated information transmitted from the first device based on the model registration indication information or the model identification indication information.

In an embodiment, the second receiving module 62 is further used for:
receiving an inference result of the first model reported from the first device.

It should be noted that the apparatus for model management provided in the embodiments of the present application is capable of implementing all method steps implemented by the method embodiment with the network device as the performing subject, and may achieve the same technical effects. Therefore, specific descriptions of the same parts and beneficial effects as the method embodiment in this embodiment are not repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

In some embodiments, a computer-readable storage medium is further provided, where the computer-readable storage medium stores a computer program for causing a computer to perform the methods for model management provided by the above method embodiments.

In an embodiment, the computer-readable storage medium provided in the embodiments of the present application may implement all the method steps implemented in the above method embodiments and achieve the same technical effects. Therefore, the same parts and beneficial effects as the method embodiments in this embodiment are not described here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first", "second", etc. in the embodiments of the present application are used to distinguish similar objects and are not used to describe a specific order or sequence. It should be understood that the terms used in this way may be interchanged in appropriate circumstances, so that the embodiments of the present application may be implemented in order other than those illustrated or described herein, and the objects distinguished by "first" and "second" are usually of the same class, without limiting the number of objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage media (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for model management, performed by a first device, wherein the first device is a terminal or a server, the method comprising:
transmitting model associated information to a network device, wherein the model associated information is used to register or identify a first model; and
receiving lifecycle management control information transmitted from the network device, wherein the lifecycle management control information is used to manage the first model.

2. The method of claim 1, wherein the model associated information comprises at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, wherein the second model is a model of the network device.

3. The method of claim 2, wherein the information associated with the training dataset corresponding to the first model comprises at least one of the following:
nature or source information of the training dataset;
an identifier of the training dataset;
attribute information of the training dataset; or
information associated with data collection of the training dataset.

4. The method of claim 3, wherein the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset comprises at least one of the following:
a quantity of the training dataset; or
a size of the training dataset; and
the information associated with data collection of the training dataset comprises at least one of the following:
information associated with a collection location of the training dataset;
information associated with a collection configuration of the training dataset; or
information associated with a collection scenario of the training dataset.

5. The method of claim 2, wherein the performance associated information comprises performance of a model and/or a source of the performance associated information, wherein
the performance of the model comprises at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
performance associated information estimated by the first device;
performance associated information tested by the first device;
performance associated information detected through the network device; or
pre-evaluated performance associated information.

6. The method of claim 5, wherein the first performance indicator is any of the following:
in case that the first model is used for channel state information (CSI) compression feedback, the first performance indicator comprises similarity between a first channel and a channel compressed and restored by the first model;
in case that the first model is used for channel state information (CSI) prediction, the first performance indicator comprises similarity between a first channel and a channel predicted by the first model;
in case that the first model is used for beam management, the first performance indicator comprises: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator comprises: a difference between an actual intermediate variable and an intermediate variable inferred by the first model, and/or accuracy of a line of sight and/or non-line of sight inferred by the first model;
the second performance indicator is any of the following:
in case that the first model is used for CSI compression feedback, the second performance indicator comprises: a change in system throughput after CSI compression feedback is performed using the first model, and/or a change in required signal to interference plus noise ratio (SINR) under a same bit error rate after CSI compression feedback is performed using the first model;
in case that the first model is used for CSI prediction, the second performance indicator comprises: a change in system throughput after CSI prediction is performed using the first model, and/or a change in required signal to interference plus noise ratio (SINR) under a same bit error rate after CSI prediction is performed using the first model;
in case that the first model is used for beam management, the second performance indicator comprises: a change in system throughput after beam management is performed using the first model, and/or a change in required signal to interference plus noise ratio (SINR) under a same bit error rate after beam management is performed using the first model; or
in case that the first model is used for positioning, the second performance indicator is deviation between an actual position and a position inferred by the first model; and
the third performance indicator comprises at least one of the following:
reference time required for performing one inference using the first model;
complexity of the first model;
generalization performance of the first model; or
an information value of the first model, wherein the information value is used to indicate performance of the first model.

7. The method of claim 2, wherein the quantization information comprises at least one of the following:
quantization type information, wherein the quantization type information comprises quantization metric associated information and/or quantization method information;
normalization associated information, wherein the normalization associated information is used to indicate whether to normalize the input and/or the output of the first model;
a unit of the input of the first model; or
a unit of the output of the first model.

8. The method of claim 2, wherein the information associated with the coexistence capability comprises at least one of the following:
first information associated with the coexistence capability, wherein the first information associated with the coexistence capability is used to indicate a model allowed to be activated simultaneously with the first model, or a model not allowed to be activated simultaneously with the first model; or
second information associated with the coexistence capability, wherein the second information associated with the coexistence capability is used to indicate a non-model function allowed to be used simultaneously with the first model, or a non-model function not allowed to be used simultaneously with the first model.

9. The method of claim 8, wherein the first information associated with the coexistence capability comprises at least one of the following:
a list of models allowed to be activated simultaneously with the first model;
a list of models not allowed to be activated simultaneously with the first model;
a first bitmap, wherein each bit in the first bitmap is used to indicate whether a corresponding model is allowed to be activated simultaneously with the first model; or
first indication information, wherein the first indication information is used to indicate whether a model not allowed to be activated simultaneously with the first model is present; and
the second information associated with the coexistence capability comprises at least one of the following:
a list of non-model functions allowed to be used simultaneously with the first model;
a list of non-model functions not allowed to be used simultaneously with the first model;
a second bitmap, wherein each bit in the second bitmap is used to indicate whether a corresponding non-model function is allowed to be used simultaneously with the first model; or
second indication information, wherein the second indication information is used to indicate whether a non-model function not allowed to be used simultaneously with the first model is present.

10. The method of claim 2, wherein the information associated with the second model comprises at least one of the following:
an index of the second model;
an application scenario corresponding to the second model;
a configuration corresponding to the second model;
an address corresponding to the second model; or
performance associated information of the second model.

11. The method of claim 10, wherein the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

12. The method of any of claims 1 to **11,** wherein the lifecycle management control information comprises at least one of the following:
activation indication information of the first model;
deactivation indication information of the first model;
model selection indication information;
model switching indication information;
indication information for fallback to a non-model function;
monitoring indication information of the first model; or
inference indication information of the first model.

13. The method of any of claims 1 to 11, wherein transmitting the model associated information to the network device comprises at least one of the following:
transmitting the model associated information to the network device after transmitting first capability reporting information to the network device;
transmitting first capability reporting information and the model associated information to the network device;
transmitting second capability reporting information to the network device, wherein the second capability reporting information comprises the model associated information; or
receiving model registration indication information or model identification indication information transmitted from the network device, and transmitting the model associated information to the network device based on the model registration indication information or the model identification indication information.

14. The method of any of claims 1 to 11, wherein the method further comprises:
reporting an inference result of the first model to the network device.

15. A method for model management, performed by a network device, the method comprising:
receiving model associated information transmitted from a first device, wherein the model associated information is used to register or identify a first model, and the first device is a terminal or a server; and
transmitting lifecycle management control information to the first device based on the model associated information, wherein the lifecycle management control information is used to manage the first model.

16. The method of claim 15, wherein the model associated information comprises at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, wherein the second model is a model of the network device.

17. The method of claim 16, wherein the information associated with the training dataset corresponding to the first model comprises at least one of the following:
nature or source information of the training dataset;
an identifier of the training dataset;
attribute information of the training dataset; or
information associated with data collection of the training dataset.

18. The method of claim 17, wherein the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset comprises at least one of the following:
a quantity of the training dataset; or
a size of the training dataset; and
the information associated with data collection of the training dataset comprises at least one of the following:
information associated with a collection location of the training dataset;
information associated with a collection configuration of the training dataset; or
information associated with a collection scenario of the training dataset.

19. The method of claim 16, wherein the performance associated information comprises performance of a model and/or a source of the performance associated information, wherein
the performance of the model comprises at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
performance associated information estimated by the first device;
performance associated information tested by the first device;
performance associated information detected through the network device; or
pre-evaluated performance associated information.

20. The method of claim 19, wherein the first performance indicator is any of the following:
in case that the first model is used for channel state information (CSI) compression feedback, the first performance indicator comprises similarity between a first channel and a channel compressed and restored by the first model;
in case that the first model is used for channel state information (CSI) prediction, the first performance indicator comprises similarity between a first channel and a channel predicted by the first model;
in case that the first model is used for beam management, the first performance indicator comprises: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator comprises: a difference between an actual intermediate variable and an intermediate variable inferred by the first model, and/or accuracy of a line of sight and/or non-line of sight inferred by the first model;
the second performance indicator is any of the following:
in case that the first model is used for CSI compression feedback, the second performance indicator comprises: a change in system throughput after CSI compression feedback is performed using the first model, and/or a change in required signal to interference plus noise ratio (SINR) under a same bit error rate after CSI compression feedback is performed using the first model;
in case that the first model is used for CSI prediction, the second performance indicator comprises: a change in system throughput after CSI prediction is performed using the first model, and/or a change in required signal to interference plus noise ratio (SINR) under a same bit error rate after CSI prediction is performed using the first model;
in case that the first model is used for beam management, the second performance indicator comprises: a change in system throughput after beam management is performed using the first model, and/or a change in required signal to interference plus noise ratio (SINR) under a same bit error rate after beam management is performed using the first model; or
in case that the first model is used for positioning, the second performance indicator is deviation between an actual position and a position inferred by the first model; and
the third performance indicator comprises at least one of the following:
reference time required for performing one inference using the first model;
complexity of the first model;
generalization performance of the first model; or
an information value of the first model, wherein the information value is used to indicate performance of the first model.

21. The method of claim 16, wherein the quantization information comprises at least one of the following:
quantization type information, wherein the quantization type information comprises quantization metric associated information and/or quantization method information;
normalization associated information, wherein the normalization associated information is used to indicate whether to normalize the input and/or the output of the first model;
a unit of the input of the first model; or
a unit of the output of the first model.

22. The method of claim 16, wherein the information associated with the coexistence capability comprises at least one of the following:
first information associated with the coexistence capability, wherein the first information associated with the coexistence capability is used to indicate a model allowed to be activated simultaneously with the first model, or a model not allowed to be activated simultaneously with the first model; or
second information associated with the coexistence capability, wherein the second information associated with the coexistence capability is used to indicate a non-model function allowed to be used simultaneously with the first model, or a non-model function not allowed to be used simultaneously with the first model.

23. The method of claim 22, wherein the first information associated with the coexistence capability comprises at least one of the following:
a list of models allowed to be activated simultaneously with the first model;
a list of models not allowed to be activated simultaneously with the first model;
a first bitmap, wherein the first bitmap is used to indicate whether a corresponding model is allowed to be activated simultaneously with the first model; or
first indication information, wherein the first indication information is used to indicate whether a model not allowed to be activated simultaneously with the first model is present; and
the second information associated with the coexistence capability comprises at least one of the following:
a list of non-model functions allowed to be used simultaneously with the first model;
a list of non-model functions not allowed to be used simultaneously with the first model;
a second bitmap, wherein the second bitmap is used to indicate whether a corresponding non-model function is allowed to be used simultaneously with the first model; or
second indication information, wherein the second indication information is used to indicate whether a non-model function not allowed to be used simultaneously with the first model is present.

24. The method of claim 16, wherein the information associated with the second model comprises at least one of the following:
an index of the second model;
an application scenario corresponding to the second model;
a configuration corresponding to the second model;
an address corresponding to the second model; or
performance associated information of the second model.

25. The method of claim 24, wherein the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

26. The method of any of claims 15 to 25, wherein the lifecycle management control information comprises at least one of the following:
activation indication information of the first model;
deactivation indication information of the first model;
model selection indication information;
model switching indication information;
indication information for fallback to a non-model function;
monitoring indication information of the first model; or
inference indication information of the first model.

27. The method of any of claims 15 to 25, wherein receiving model associated information transmitted from the first device comprises at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, wherein the second capability reporting information comprises the model associated information; or
transmitting model registration indication information or model identification indication information to the first device, and receiving the model associated information transmitted from the first device based on the model registration indication information or the model identification indication information.

28. The method of any of claims 15 to 25, wherein the method further comprises:
receiving an inference result of the first model reported from the first device.

29. A first device, comprising a memory, a transceiver, and a processor, wherein
the memory is used for storing a computer program; the transceiver is used for transmitting and receiving data under control of the processor; and the processor is used for reading the computer program stored in the memory and performing the following operations:
transmitting model associated information to a network device, wherein the model associated information is used to register or identify a first model; and
receiving lifecycle management control information transmitted from the network device, wherein the lifecycle management control information is used to manage the first model.

30. The first device of claim 29, wherein the model associated information comprises at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, wherein the second model is a model of the network device.

31. The first device of claim 30, wherein the information associated with the training dataset corresponding to the first model comprises at least one of the following:
nature or source information of the training dataset;
an identifier of the training dataset;
attribute information of the training dataset; or
information associated with data collection of the training dataset.

32. The first device of claim 31, wherein the nature or source information of the training dataset is used to indicate at least one of the following:
the training dataset is a training dataset indicated by the network device;
the training dataset is a predefined training dataset;
the training dataset is a training dataset used by a terminal; or
the training dataset is a training dataset used by the server;
the attribute information of the training dataset comprises at least one of the following:
a quantity of the training dataset; or
a size of the training dataset; and
the information associated with data collection of the training dataset comprises at least one of the following:
information associated with a collection location of the training dataset;
information associated with a collection configuration of the training dataset; or
information associated with a collection scenario of the training dataset.

33. The first device of claim 30, wherein the performance associated information comprises performance of a model and/or a source of the performance associated information, wherein
the performance of the model comprises at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
performance associated information estimated by the first device;
performance associated information tested by the first device;
performance associated information detected through the network device; or
pre-evaluated performance associated information.

34. The first device of claim 33, wherein the first performance indicator is any of the following:
in case that the first model is used for channel state information (CSI) compression feedback, the first performance indicator comprises similarity between a first channel and a channel compressed and restored by the first model;
in case that the first model is used for channel state information (CSI) prediction, the first performance indicator comprises similarity between a first channel and a channel predicted by the first model;
in case that the first model is used for beam management, the first performance indicator comprises: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator comprises: a difference between an actual intermediate variable and an intermediate variable inferred by the first model, and/or accuracy of a line of sight and/or non-line of sight inferred by the first model;
the second performance indicator is any of the following:
in case that the first model is used for CSI compression feedback, the second performance indicator comprises: a change in system throughput after CSI compression feedback is performed using the first model, and/or a change in required signal to interference plus noise ratio (SINR) under a same bit error rate after CSI compression feedback is performed using the first model;
in case that the first model is used for CSI prediction, the second performance indicator comprises: a change in system throughput after CSI prediction is performed using the first model, and/or a change in required signal to interference plus noise ratio (SINR) under a same bit error rate after CSI prediction is performed using the first model;
in case that the first model is used for beam management, the second performance indicator comprises: a change in system throughput after beam management is performed using the first model, and/or a change in required signal to interference plus noise ratio (SINR) under a same bit error rate after beam management is performed using the first model; or
in case that the first model is used for positioning, the second performance indicator is deviation between an actual position and a position inferred by the first model; and
the third performance indicator comprises at least one of the following:
reference time required for performing one inference using the first model;
complexity of the first model;
generalization performance of the first model; or
an information value of the first model, wherein the information value is used to indicate performance of the first model.

35. The first device of claim 30, wherein the quantified information comprises at least one of the following:
quantization type information, wherein the quantization type information comprises quantization metric associated information and/or quantization method information;
normalization associated information, wherein the normalization associated information is used to indicate whether to normalize the input and/or the output of the first model;
a unit of the input of the first model; or
a unit of the output of the first model.

36. The first device of claim 30, wherein the information associated with the coexistence capability comprises at least one of the following:
first information associated with the coexistence capability, wherein the first information associated with the coexistence capability is used to indicate a model allowed to be activated simultaneously with the first model, or a model not allowed to be activated simultaneously with the first model; or
second information associated with the coexistence capability, wherein the second information associated with the coexistence capability is used to indicate a non-model function allowed to be used simultaneously with the first model, or a non-model function not allowed to be used simultaneously with the first model.

37. The first device of claim 36, wherein the first information associated with the coexistence capability comprises at least one of the following:
a list of models allowed to be activated simultaneously with the first model;
a list of models not allowed to be activated simultaneously with the first model;
a first bitmap, wherein each bit in the first bitmap is used to indicate whether a corresponding model is allowed to be activated simultaneously with the first model; or
first indication information, wherein the first indication information is used to indicate whether a model not allowed to be activated simultaneously with the first model is present; and
the second information associated with the coexistence capability comprises at least one of the following:
a list of non-model functions allowed to be used simultaneously with the first model;
a list of non-model functions not allowed to be used simultaneously with the first model;
a second bitmap, wherein each bit in the second bitmap is used to indicate whether a corresponding non-model function is allowed to be used simultaneously with the first model; or
second indication information, wherein the second indication information is used to indicate whether a non-model function not allowed to be used simultaneously with the first model is present.

38. The first device of claim 30, wherein the information associated with the second model comprises at least one of the following:
an index of the second model;
an application scenario corresponding to the second model;
a configuration corresponding to the second model;
an address corresponding to the second model; or
performance associated information of the second model.

39. The first device of claim 38, wherein the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

40. The first device of any of claims 29 to 39, wherein the lifecycle management control information comprises at least one of the following:
activation indication information of the first model;
deactivation indication information of the first model;
model selection indication information;
model switching indication information;
indication information for fallback to a non-model function;
monitoring indication information of the first model; or
inference indication information of the first model.

41. The first device of any of claims 29 to 39, wherein transmitting the model associated information to the network device comprises at least one of the following:
transmitting the model associated information to the network device after transmitting first capability reporting information to the network device;
transmitting first capability reporting information and the model associated information to the network device;
transmitting second capability reporting information to the network device, wherein the second capability reporting information comprises the model associated information; or
receiving model registration indication information or model identification indication information transmitted from the network device, and transmitting the model associated information to the network device based on the model registration indication information or the model identification indication information.

42. The first device of any of claims 29 to 39, wherein the processor is further used for reading the computer program from the memory and performing the following operations:
reporting an inference result of the first model to the network device.

43. A network device, comprising a memory, a transceiver, and a processor, wherein
the memory is used for storing a computer program; the transceiver is used for transmitting and receiving data under control of the processor; and the processor is used for reading the computer program stored in the memory and performing the following operations:
receiving model associated information transmitted from a first device, wherein the model associated information is used to register or identify a first model, and the first device is a terminal or a server; and
transmitting lifecycle management control information to the first device based on the model associated information, wherein the lifecycle management control information is used to manage the first model.

44. The network device of claim 43, wherein the model associated information comprises at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, wherein the second model is a model of the network device.

45. The network device of claim 44, wherein the information associated with the training dataset corresponding to the first model comprises at least one of the following:
nature or source information of the training dataset;
an identifier of the training dataset;
attribute information of the training dataset; or
information associated with data collection of the training dataset.

46. The network device of claim 45, wherein the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset comprises at least one of the following:
a quantity of the training dataset; or
a size of the training dataset; and
the information associated with data collection of the training dataset comprises at least one of the following:
information associated with a collection location of the training dataset;
information associated with a collection configuration of the training dataset; or
information associated with a collection scenario of the training dataset.

47. The network device of claim 44, wherein the performance associated information comprises performance of a model and/or a source of the performance associated information, wherein
the performance of the model comprises at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
performance associated information estimated by the first device;
performance associated information tested by the first device;
performance associated information detected through the network device; or
pre-evaluated performance associated information.

48. The network device of claim 47, wherein the first performance indicator is any of the following:
in case that the first model is used for channel state information (CSI) compression feedback, the first performance indicator comprises similarity between a first channel and a channel compressed and restored by the first model;
in case that the first model is used for channel state information (CSI) prediction, the first performance indicator comprises similarity between a first channel and a channel predicted by the first model;
in case that the first model is used for beam management, the first performance indicator comprises: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator comprises: a difference between an actual intermediate variable and an intermediate variable inferred by the first model, and/or accuracy of a line of sight and/or non-line of sight inferred by the first model;
the second performance indicator is any of the following:
in case that the first model is used for CSI compression feedback, the second performance indicator comprises: a change in system throughput after CSI compression feedback is performed using the first model, and/or a change in required signal to interference plus noise ratio (SINR) under a same bit error rate after CSI compression feedback is performed using the first model;
in case that the first model is used for CSI prediction, the second performance indicator comprises: a change in system throughput after CSI prediction is performed using the first model, and/or a change in required signal to interference plus noise ratio (SINR) under a same bit error rate after CSI prediction is performed using the first model;
in case that the first model is used for beam management, the second performance indicator comprises: a change in system throughput after beam management is performed using the first model, and/or a change in required signal to interference plus noise ratio (SINR) under a same bit error rate after beam management is performed using the first model; or
in case that the first model is used for positioning, the second performance indicator is deviation between an actual position and a position inferred by the first model; and
the third performance indicator comprises at least one of the following:
reference time required for performing one inference using the first model;
complexity of the first model;
generalization performance of the first model; or
an information value of the first model, wherein the information value is used to indicate performance of the first model.

49. The network device of claim 44, wherein the quantified information comprises at least one of the following:
quantization type information, wherein the quantization type information comprises quantization metric associated information and/or quantization method information;
normalization associated information, wherein the normalization associated information is used to indicate whether to normalize the input and/or the output of the first model;
a unit of the input of the first model; or
a unit of the output of the first model.

50. The network device of claim 44, wherein the information associated with the coexistence capability comprises at least one of the following:
first information associated with the coexistence capability, wherein the first information associated with the coexistence capability is used to indicate a model allowed to be activated simultaneously with the first model, or a model not allowed to be activated simultaneously with the first model; or
second information associated with the coexistence capability, wherein the second information associated with the coexistence capability is used to indicate a non-model function allowed to be used simultaneously with the first model, or a non-model function not allowed to be used simultaneously with the first model.

51. The network device of claim 50, wherein the first information associated with the coexistence capability comprises at least one of the following:
a list of models allowed to be activated simultaneously with the first model;
a list of models not allowed to be activated simultaneously with the first model;
a first bitmap, wherein the first bitmap is used to indicate whether a corresponding model is allowed to be activated simultaneously with the first model; or
first indication information, wherein the first indication information is used to indicate whether a model not allowed to be activated simultaneously with the first model is present; and
the second information associated with the coexistence capability comprises at least one of the following:
a list of non-model functions allowed to be used simultaneously with the first model;
a list of non-model functions not allowed to be used simultaneously with the first model;
a second bitmap, wherein the second bitmap is used to indicate whether a corresponding non-model function is allowed to be used simultaneously with the first model; or
second indication information, wherein the second indication information is used to indicate whether a non-model function not allowed to be used simultaneously with the first model is present.

52. The network device of claim 44, wherein the information associated with the second model comprises at least one of the following:
an index of the second model;
an application scenario corresponding to the second model;
a configuration corresponding to the second model;
an address corresponding to the second model; or
performance associated information of the second model.

53. The network device of claim 52, wherein the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

54. The network device of any of claims 43 to 53, wherein the processor is further used for reading the computer program from the memory and performing the following operations:
activation indication information of the first model;
deactivation indication information of the first model;
model selection indication information;
model switching indication information;
indication information for fallback to a non-model function;
monitoring indication information of the first model; or
inference indication information of the first model.

55. The network device of any of claims 43 to 53, wherein receiving the model associated information transmitted from the first device comprises at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, wherein the second capability reporting information comprises the model associated information; or
transmitting model registration indication information or model identification indication information to the first device, and receiving the model associated information transmitted from the first device based on the model registration indication information or the model identification indication information.

56. The network device of any of claims 43 to 53, wherein the processor is further used for reading the computer program from the memory and performing the following operations:
receiving an inference result of the first model reported from the first device.

57. An apparatus for model management, comprising:
a first transmitting module, used for transmitting model associated information to a network device, wherein the model associated information is used to register or identify a first model; and
a first receiving module, used for receiving lifecycle management control information transmitted from the network device, wherein the lifecycle management control information is used to manage the first model.

58. The apparatus of claim 57, wherein the model associated information comprises at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, wherein the second model is a model of the network device.

59. The apparatus of claim 58, wherein the information associated with the training dataset corresponding to the first model comprises at least one of the following:
nature or source information of the training dataset;
an identifier of the training dataset;
attribute information of the training dataset; or
information associated with data collection of the training dataset.

60. The apparatus of claim 59, wherein the nature or source information of the training dataset is used to indicate at least one of the following:
the training dataset is a training dataset indicated by the network device;
the training dataset is a predefined training dataset;
the training dataset is a training dataset used by a terminal; or
the training dataset is a training dataset used by the server;
the attribute information of the training dataset comprises at least one of the following:
a quantity of the training dataset; or
a size of the training dataset; and
the information associated with data collection of the training dataset comprises at least one of the following:
information associated with a collection location of the training dataset;
information associated with a collection configuration of the training dataset; or
information associated with a collection scenario of the training dataset.

61. The apparatus of claim 58, wherein the performance associated information comprises performance of a model and/or a source of the performance associated information, wherein
the performance of the model comprises at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
performance associated information estimated by the first device;
performance associated information tested by the first device;
performance associated information detected through the network device; or
pre-evaluated performance associated information.

62. The apparatus of claim 61, wherein the first performance indicator is any of the following:
in case that the first model is used for channel state information (CSI) compression feedback, the first performance indicator comprises similarity between a first channel and a channel compressed and restored by the first model;
in case that the first model is used for channel state information (CSI) prediction, the first performance indicator comprises similarity between a first channel and a channel predicted by the first model;
in case that the first model is used for beam management, the first performance indicator comprises: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator comprises: a difference between an actual intermediate variable and an intermediate variable inferred by the first model, and/or accuracy of a line of sight and/or non-line of sight inferred by the first model;
the second performance indicator is any of the following:
in case that the first model is used for CSI compression feedback, the second performance indicator comprises: a change in system throughput after CSI compression feedback is performed using the first model, and/or a change in required signal to interference plus noise ratio (SINR) under a same bit error rate after CSI compression feedback is performed using the first model;
in case that the first model is used for CSI prediction, the second performance indicator comprises: a change in system throughput after CSI prediction is performed using the first model, and/or a change in required signal to interference plus noise ratio (SINR) under a same bit error rate after CSI prediction is performed using the first model;
in case that the first model is used for beam management, the second performance indicator comprises: a change in system throughput after beam management is performed using the first model, and/or a change in required signal to interference plus noise ratio (SINR) under a same bit error rate after beam management is performed using the first model; or
in case that the first model is used for positioning, the second performance indicator is deviation between an actual position and a position inferred by the first model; and
the third performance indicator comprises at least one of the following:
reference time required for performing one inference using the first model;
complexity of the first model;
generalization performance of the first model; or
an information value of the first model, wherein the information value is used to indicate performance of the first model.

63. The apparatus of claim 58, wherein the quantization information comprises at least one of the following:
quantization type information, wherein the quantization type information comprises quantization metric associated information and/or quantization method information;
normalization associated information, wherein the normalization associated information is used to indicate whether to normalize the input and/or the output of the first model;
a unit of the input of the first model; or
a unit of the output of the first model.

64. The apparatus of claim 58, wherein the information associated with the coexistence capability comprises at least one of the following:
first information associated with the coexistence capability, wherein the first information associated with the coexistence capability is used to indicate a model allowed to be activated simultaneously with the first model, or a model not allowed to be activated simultaneously with the first model; or
second information associated with the coexistence capability, wherein the second information associated with the coexistence capability is used to indicate a non-model function allowed to be used simultaneously with the first model, or a non-model function not allowed to be used simultaneously with the first model.

65. The apparatus of claim 64, wherein the first information associated with the coexistence capability comprises at least one of the following:
a list of models allowed to be activated simultaneously with the first model;
a list of models not allowed to be activated simultaneously with the first model;
a first bitmap, wherein each bit in the first bitmap is used to indicate whether a corresponding model is allowed to be activated simultaneously with the first model; or
first indication information, wherein the first indication information is used to indicate whether a model not allowed to be activated simultaneously with the first model is present; and
the second information associated with the coexistence capability comprises at least one of the following:
a list of non-model functions allowed to be used simultaneously with the first model;
a list of non-model functions not allowed to be used simultaneously with the first model;
a second bitmap, wherein each bit in the second bitmap is used to indicate whether a corresponding non-model function is allowed to be used simultaneously with the first model; or
second indication information, wherein the second indication information is used to indicate whether a non-model function not allowed to be used simultaneously with the first model is present.

66. The apparatus of claim 58, wherein the information associated with the second model comprises at least one of the following:
an index of the second model;
an application scenario corresponding to the second model;
a configuration corresponding to the second model;
an address corresponding to the second model; or
performance associated information of the second model.

67. The apparatus of claim 66, wherein the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

68. The apparatus of any of claims 57 to 67, wherein the lifecycle management control information comprises at least one of the following:
activation indication information of the first model;
deactivation indication information of the first model;
model selection indication information;
model switching indication information;
indication information for fallback to a non-model function;
monitoring indication information of the first model; or
inference indication information of the first model.

69. The apparatus of any of claims 57 to 67, wherein the first transmitting module is further used for at least one of the following:
transmitting the model associated information to the network device after transmitting first capability reporting information to the network device;
transmitting first capability reporting information and the model associated information to the network device;
transmitting second capability reporting information to the network device, wherein the second capability reporting information comprises the model associated information; or
receiving model registration indication information or model identification indication information transmitted from the network device, and transmitting the model associated information to the network device based on the model registration indication information or the model identification indication information.

70. The apparatus of any of claims 57 to 67, wherein the first transmitting module is further used for:
reporting an inference result of the first model to the network device.

71. An apparatus for model management, comprising:
a second receiving module, used for receiving model associated information transmitted from a first device, wherein the model associated information is used to register or identify a first model, and the first device is a terminal or a server; and
a second transmitting module, used for transmitting lifecycle management control information to the first device based on the model associated information, wherein the lifecycle management control information is used to manage the first model.

72. The apparatus of claim 71, wherein the model associated information comprises at least one of the following:
information associated with a training dataset corresponding to the first model;
performance associated information of the first model;
quantization information of an input and/or an output of the first model;
information associated with a coexistence capability of the first model; or
information associated with one or more second models corresponding to the first model, wherein the second model is a model of the network device.

73. The apparatus of claim 72, wherein the information associated with the training dataset corresponding to the first model comprises at least one of the following:
nature or source information of the training dataset;
an identifier of the training dataset;
attribute information of the training dataset; or
information associated with data collection of the training dataset.

74. The apparatus of claim 73, wherein the nature or source information of the training dataset is used to indicate at least one of the following:
the training dataset is a training dataset indicated by the network device;
the training dataset is a predefined training dataset;
the training dataset is a training dataset used by the terminal; or
the training dataset is a training dataset used by the server;
the attribute information of the training dataset comprises at least one of the following:
a quantity of the training dataset; or
a size of the training dataset; and
the information associated with data collection of the training dataset comprises at least one of the following:
information associated with a collection location of the training dataset;
information associated with a collection configuration of the training dataset; or
information associated with a collection scenario of the training dataset.

75. The apparatus of claim 72, wherein the performance associated information comprises performance of a model and/or a source of the performance associated information, wherein
the performance of the model comprises at least one of the following:
a first performance indicator associated with an inferred output of the first model;
a second performance indicator associated with communication performance of a communication system applied with the first model; or
a third performance indicator of the first model *per se;* and
the source of the performance associated information is used to indicate that the performance associated information is at least one of the following:
performance associated information estimated by the first device;
performance associated information tested by the first device;
performance associated information detected through the network device; or
pre-evaluated performance associated information.

76. The apparatus of claim 75, wherein the first performance indicator is any of the following:
in case that the first model is used for channel state information (CSI) compression feedback, the first performance indicator comprises similarity between a first channel and a channel compressed and restored by the first model;
in case that the first model is used for channel state information (CSI) prediction, the first performance indicator comprises similarity between a first channel and a channel predicted by the first model;
in case that the first model is used for beam management, the first performance indicator comprises: a probability that a beam inferred and predicted by the first model is a target beam, and/or a difference between reference signal receiving power (RSRP) of an inferred and predicted beam and RSRP of a target beam; or
in case that the first model is used for positioning, the first performance indicator comprises: a difference between an actual intermediate variable and an intermediate variable inferred by the first model, and/or accuracy of a line of sight and/or non-line of sight inferred by the first model;
the second performance indicator is any of the following:
in case that the first model is used for CSI compression feedback, the second performance indicator comprises: a change in system throughput after CSI compression feedback is performed using the first model, and/or a change in required signal to interference plus noise ratio (SINR) under a same bit error rate after CSI compression feedback is performed using the first model;
in case that the first model is used for CSI prediction, the second performance indicator comprises: a change in system throughput after CSI prediction is performed using the first model, and/or a change in required signal to interference plus noise ratio (SINR) under a same bit error rate after CSI prediction is performed using the first model;
in case that the first model is used for beam management, the second performance indicator comprises: a change in system throughput after beam management is performed using the first model, and/or a change in required signal to interference plus noise ratio (SINR) under a same bit error rate after beam management is performed using the first model; or
in case that the first model is used for positioning, the second performance indicator is deviation between an actual position and a position inferred by the first model; and
the third performance indicator comprises at least one of the following:
reference time required for performing one inference using the first model;
complexity of the first model;
generalization performance of the first model; or
an information value of the first model, wherein the information value is used to indicate performance of the first model.

77. The apparatus of claim 72, wherein the quantization information comprises at least one of the following:
quantization type information, wherein the quantization type information comprises quantization metric associated information and/or quantization method information;
normalization associated information, wherein the normalization associated information is used to indicate whether to normalize the input and/or the output of the first model;
a unit of the input of the first model; or
a unit of the output of the first model.

78. The apparatus of claim 72, wherein the information associated with the coexistence capability comprises at least one of the following:
first information associated with the coexistence capability, wherein the first information associated with the coexistence capability is used to indicate a model allowed to be activated simultaneously with the first model, or a model not allowed to be activated simultaneously with the first model; or
second information associated with the coexistence capability, wherein the second information associated with the coexistence capability is used to indicate a non-model function allowed to be used simultaneously with the first model, or a non-model function not allowed to be used simultaneously with the first model.

79. The apparatus of claim 78, wherein the first information associated with the coexistence capability comprises at least one of the following:
a list of models allowed to be activated simultaneously with the first model;
a list of models not allowed to be activated simultaneously with the first model;
a first bitmap, wherein the first bitmap is used to indicate whether a corresponding model is allowed to be activated simultaneously with the first model; or
first indication information, wherein the first indication information is used to indicate whether a model not allowed to be activated simultaneously with the first model is present; and
the second information associated with the coexistence capability comprises at least one of the following:
a list of non-model functions allowed to be used simultaneously with the first model;
a list of non-model functions not allowed to be used simultaneously with the first model;
a second bitmap, wherein the second bitmap is used to indicate whether a corresponding non-model function is allowed to be used simultaneously with the first model; or
second indication information, wherein the second indication information is used to indicate whether a non-model function not allowed to be used simultaneously with the first model is present.

80. The apparatus of claim 72, wherein the information associated with the second model comprises at least one of the following:
an index of the second model;
an application scenario corresponding to the second model;
a configuration corresponding to the second model;
an address corresponding to the second model; or
performance associated information of the second model.

81. The apparatus of claim 80, wherein the second model satisfies at least one of the following:
the second model is trained by the first device and transmitted to the network device;
the second model is trained by the network device, the first model is trained by the first device, and a training dataset of the first model is transmitted from the network device to the first device;
the second model is a predefined model; or
the second model is a model indicated by the network device.

82. The apparatus of any of claims 71 to 81, wherein the lifecycle management control information comprises at least one of the following:
activation indication information of the first model;
deactivation indication information of the first model;
model selection indication information;
model switching indication information;
indication information for fallback to a non-model function;
monitoring indication information of the first model; or
inference indication information of the first model.

83. The apparatus of any of claims 71 to 81, wherein the second receiving module is further used for at least one of the following:
receiving the model associated information transmitted from the first device after receiving first capability reporting information transmitted from the first device;
receiving first capability reporting information and the model associated information transmitted from the first device;
receiving second capability reporting information transmitted from the first device, wherein the second capability reporting information comprises the model associated information; or
transmitting model registration indication information or model identification indication information to the first device, and receiving the model associated information transmitted from the first device based on the model registration indication information or the model identification indication information.

84. The apparatus of any of claims 71 to 81, wherein the second receiving module is further used for:
receiving an inference result of the first model reported from the first device.

85. A computer-readable storage medium, wherein the computer-readable storage medium stores a computer program, and the computer program is used to cause a computer to perform the method of any of claims 1 to 14, or the computer program is used to cause a computer to perform the method of any of claims 15 to 28.
